(19) Europäisches Patentamt European Patent Office Office européen des brevets

(11) **EP 3 885 405 A1**

(12) **EUROPEAN PATENT APPLICATION**

(43) Date of publication:
**29.09.2021 Bulletin 2021/39**

(51) Int Cl.:
***C08L 3/02*** *(2006.01)*      ***C08L 23/04*** *(2006.01)*

(21) Application number: **20382226.7**

(22) Date of filing: **25.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Consejo Superior de Investigaciones Científicas (CSIC)**
  **28006 Madrid (ES)**
• **Université de Mons**
  **7000 Mons (BE)**

(72) Inventors:
• **SESSINI, Valentina**
  **28006 Madrid (ES)**
• **PEPONI, Laura**
  **28006 Madrid (ES)**
• **RAQUEZ, Jean-Marie**
  **B-7000 MONS (BE)**
• **DUBOIS, Philippe**
  **B-7000 MONS (BE)**

(74) Representative: **Pons**
  **Glorieta Rubén Darío 4**
  **28010 Madrid (ES)**

(54) **DOUBLE STIMULI RESPONSIVE SHAPE MEMORY BLENDS**

(57)    The invention relates to a double stimuli responsive shape memory blends based on crosslinked three-component system comprising ethylene-co-vinyl acetate, thermoplastic starch, and dicumyl peroxide, which has been obtained by melt processing and press molding technique, for applications in biomedical as well as packaging fields.

Fig. 2

EP 3 885 405 A1

**(Cont. next page)**

Fig. 2 (cont.)

**Description**

The invention relates to a double stimuli responsive shape memory blends based on crosslinked three-component system comprising ethylene-*co*-vinyl acetate, thermoplastic starch, and dicumyl peroxide, which has been obtained by melt processing and press molding technique, for applications in biomedical as well as packaging fields.

**BACKGROUND ART**

It is well-known from the scientific literature that several molecular structures can show chemically or physically shape memory behavior such as interpenetrating polymer networks (IPN), hydrogels, semicrystalline polyurethanes, blends, etc.

In that sense, shape-memory polymers (SMP) are stimulus-responsive materials able to change their shape by applying an external stimulus, such as temperature, light, humidity, pH, electric or magnetic field, etc. The shape-memory effect is not an intrinsic property of materials. Therefore, to show these properties, the materials require carrying out a two-stage process called "programming" and "recovery", respectively. In the first one, during the "programming", the material is deformed and fixed in a "temporary shape". In the second stage, upon the application of an external stimulus, the material recovers its initial permanent "fixed shape".

In general, SMP are formed by two domains. One is the "fixity domain" and the other one acts as the "switching domain". The fixity domain maintains the shape of the polymer on actuation while the switching domain allows the occurrence of actuation. In addition, in the thermally activated SMP, the switching domain is characterized by a switching temperature (Tsw) correlated to a thermal transition of the polymeric segments, which enables the recovery of the permanent shape.

**SUMMARY OF THE INVENTION**

The present invention discloses novel biocompatible and/or biodegradable double stimuli responsive shape memory blends based on crosslinked three-component system with shape memory behaviour for possible application in biomedical as well as packaging fields.

Shape memory polymers, SMPs, are polymeric smart materials that have the ability to return from a deformed state (temporary shape) to their original (permanent) shape when an external stimulus like temperature, humidity, light, etc., has been applied.

In general, shape memory polymers are formed by two domains and two different stage have been required, the "programming" and the "recovery" ones. In the "programming" process the material is deformed and fixed in a "temporary shape" applying the fixing temperature, Tfix. Afterwards, upon the application of the transition temperature, Ttrans, the material recovers its initial permanent shape, "recovery" process. The two different domains are the "fixity domain" able to maintain the permanent shape of the polymer and the "switching domain" able to fix the temporary ones. The shape memory behavior of thermal-induced SMPs is generally triggered by heating the specimen above the Ttrans of the switching domain. The most important transitions, which are applied for SMPs are the melting temperature, Tm, and the glass transition temperature, Tg.

In particular, the three-component system of the present inventions is able to present double stimuli responsive shape memory properties, such as thermally-activated and humidity-activated shape memory behavior.

Therefore, a first aspect of the present invention relates to a crosslinked three-component system characterized in that it comprises a blend of:

- a first polymer consisting of ethylene-co-vinyl acetate (EVA) with a proportion of vinyl acetate (VA) that ranges between 10% and 50% by weight of the total weight;
- a second polymer consisting of a thermoplastic starch (TPS); and
- a crosslinking agent consisting in an organic peroxide compound;

and wherein the proportion of ethylene-*co*-vinyl acetate ranges between 90% and 10%, the proportion of thermoplastic starch ranges between 10% and 90% and the proportion of the crosslinking agent ranges between 0.05% and 3%, with a total sum of 100%.

In a preferred embodiment, the proportion of EVA in the system of the invention ranges between 40 and 60%; and even more preferably is a proportion of 60% w/w.

In another preferred embodiment of the present invention the ethylene-*co*-vinyl acetate (EVA) in the crosslinked three-component system is a EVA with a proportion by weight of the total weight between 12% and 27% of vinyl acetate (VA); more preferably the EVA has a proportion by weight of the total weight of 19% of VA.

In another preferred embodiment, the proportion of thermoplastic starch in the system of the invention ranges between 60 and 40%; and even more preferably is in a proportion of 40% w/w.

In another preferred embodiment of the present invention the thermoplastic starch is selected from different botanical origin, such as from wheat, rice, cassava, tapioca, bean, rye, oat, sorghum, sweet potato, arrowroot, sago, plantain, banana, pea, potato, corn, barley, etc.

In another preferred embodiment, the proportion of crosslinking agent in the system of the invention ranges between 0.1 and 1%; and even more preferably is in a proportion of 0.25% w/w.

In another preferred embodiment of the present invention the crosslinking agent is selected from dicumyl peroxide, dibenzyl peroxide, *tert*-butylperoxy 2-ethylhexyl carbonate, 2,5-dimethyl-2,5-di(*tert*-butylperoxy)hexane, *tert*-butyl peroxybenzoate, *tert*-butyl peroxy-3,5,5-trimethylhexanoate and dibutyl tinoxide, tetrapropyl orthosilicate. In a more preferred embodiment, the crosslinking agent is dicumyl peroxide (DCP).

A further embodiment of the present invention provides a method for obtaining a crosslinked three-component system as described above, characterized in that it comprises the following stages:

(a) thermo-mechanical destructuration of native starch granules with liquid glycerol and distilled water;
(b) melt-blendeding of the three components, EVA, TPS and DCP with a twin-screw DSM microcompounder at a temperature that ranges between 80 and 100 °C with a screw speed that ranges between 50 and 100 rpm for 5 to 15 minutes;
(c) compression moulding into films at a temperature that ranges between 140 and 160°C for 15 to 25 minutes in order to activate the crosslinking process.

This method of obtaining the system of the invention permits the crosslinking between the three components of the system, which provides to the resulting polymer material the following characteristics:

- EVA-TPS show thermally- and humidity-activated shape memory properties;
- EVA-TPS the thermally-activated shape memory properties is obtained playing with the formation of EVA induced-crystals (switching domains) by mechanical stretching of the sample up to 250% of deformation and by using the melting temperature (40 °C) of the EVA induced-crystals as Ttrans;
- the crystalline phase of EVA has been used as fixity domain;
- the thermally-activated shape memory response is obtained when a very high deformation has applied (more than 250%).

Furthermore, this method can be considered as an easy scalable process for further industrial applications.

Numerously are the advantages presented by the three-component system, EVA-TPS-DCP, respect to the EVA-TPS system:

- The mechanical response of the EVA-TPS-DCP in term of elastic modulus (89±1 MPa) and tensile strength (17±1 MPa) is more than twice of the values obtained for the EVA-TPS, (36±1MPa for the elastic modulus, and 8±1 MPa for the tensile strength) remaining their elongation at break quite similar, at about 475% in both cases
- In the EVA-TPS-DCP system, it is possible to obtain the thermally-activated shape memory response when small deformation is applied, such as 50%. Whereas in the EVA-TPS system a big deformation is required, more than 250% in order to induce a crystalline phase. Without this induced crystalline phase it is not possible to have thermally-activated shape memory response

- EVA-TPS-DCP show thermally-activated shape memory response without the necessary to modify the structure of the system
- EVA-TPS-DCP is able to show the reproducibility of the shape memory properties during three different thermo-mechanical cycles without breaking
- EVA-TPS broke after the first thermo-mechanical cycle
- EVA-TPS-DCP shows excellent values in term of Rr and Rf during all the thermo-mechanical cycles, with values higher than 90% for Rr and more than 95% for Rf
- In the humidity-activated shape memory response the EVA-TPS-DCP shows higher values in term of Rr and Rf respect to EVA-TPS in every humidity-mechanical cycle
- In fact, EVA-TPS shows Rr values of 67%, 69%, 78% and 78% while EVA-TPS-DCP shows Rr values of 80%, 79%, 81% and 85%
- Rf values for EVA-TPS are decreasing during each cycle (74%, 76%, 70%, 65%) while Rf values for EVA-TPS-DCP are quite constant during all cycles and higher than 80% (83%, 83%, 81%, 82%).

A further embodiment of the present invention relates to the use of the crosslinked three-component system of the invention as described above for applications in fields like biomedical particularly for implantable medical devices where there is a need for materials mimicking human soft tissue, as well as packaging fields, where flexibility of materials is a relevant feature.

The term thermoplastic starch as used herein refers to a homogeneous amorphous material (all the crystalline granules are thermo-mechanically destructured or gelatinized) based on starch, water and plasticant.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples, drawings are provided by way of illustration and are not intended to be limiting of the present invention.

**BRIEF DESCRIPTION OF THE DRAWINGS**

**Fig. 1.** SEM images of crosslinked and non-crosslinked blends with different VA contents.

**Fig. 2.** Evolution of the storage modulus (E'), loss modulus (E") and damping factor (tan $\delta$) as a function of temperature, measured over the temperature range -80°C to 120 °C, for the non-crosslinked and crosslinked blends.

**Fig. 3.** TGA and DTG thermograms, measured over the temperature range RT to 600 °C, for the non-crosslinked and crosslinked blends and neat polymers, EVA and TPS.

**Fig. 4.** TGA and DTG thermograms, measured over the temperature range RT to 600 °C, for the non-crosslinked and crosslinked blends as a comparison.

**Fig. 5.** DSC analysis for the different non-crosslinked and crosslinked blends and the respective neat EVAs, at the top the cooling scans and at the bottom the second heating scans are reported.

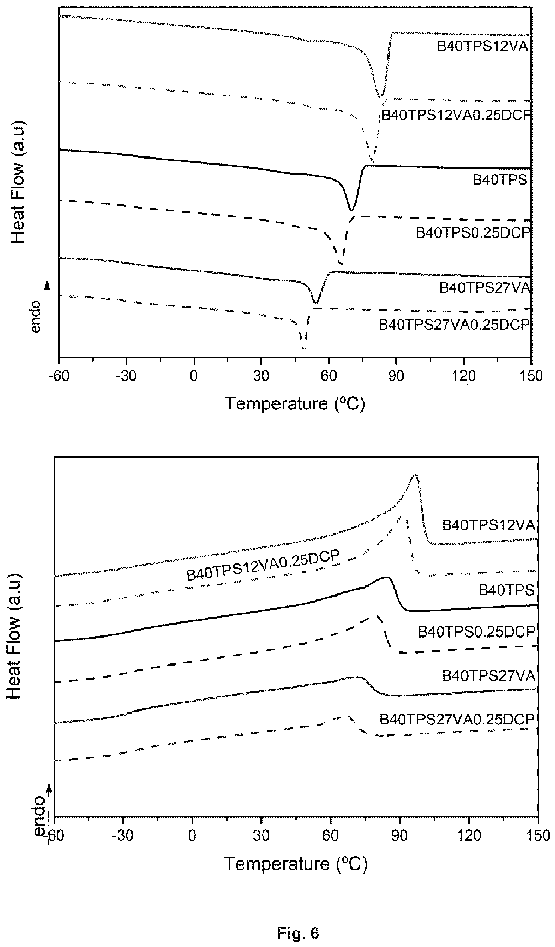

**Fig. 6.** DSC analysis comparing the different non-crosslinked and crosslinked blends, at the top the cooling scan and at the bottom the second heating scan are reported.

**Fig. 7.** Evolution of stress strain and temperature in function of time for the different non-crosslinked and crosslinked blends and the respective neat EVAs.

**Fig. 8.** Dependencies on time of moisture loss (at RH = 10 % at 20°C and 37 °C) and moisture absorption (at RH = 90 % and 37 °C). In the inset, the zoomed portions.

**Fig. 9.** Humidity-mechanical cycles for B40TPS0.25DCP. 2D stress-strain cycles and 3D stress-strain-temperature cycles diagrams, at the top and at the bottom respectively.

**EXAMPLES**

**Materials.** Native pea starch was obtained from Cosucra groupe Warcoing SA, Belgium, with a dry content of 85 wt %, including 60.7 wt % amylopectin, 35.7 wt % amylose, 3.4 wt % fiber, and 0.24 wt % protein, as determined by colorimetric methods and Prosky and DUMAS methods. Starch was used as received. Commercial EVA copolymer with 12, 19 and 27 wt % VA content was purchased from Exxon Mobil Chemical Company. Glycerol (purity 97 %) was purchased from VWR International and was used as starch plasticizer. Dicumyl peroxide (DCP) (purity 99 %) was purchased from Acros Organics.

**Example 1. Morphology studies of the obtained crosslinked and non-crosslinked blends with different VA contents**

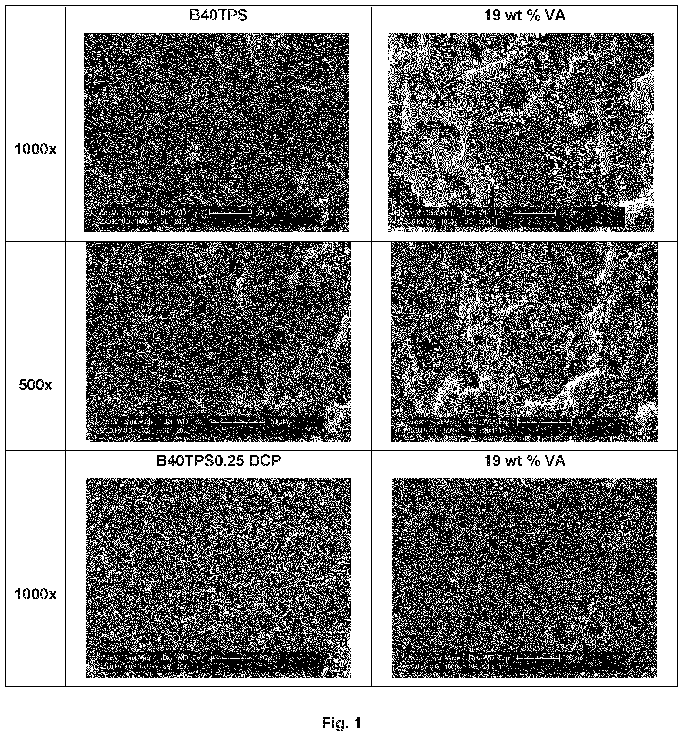

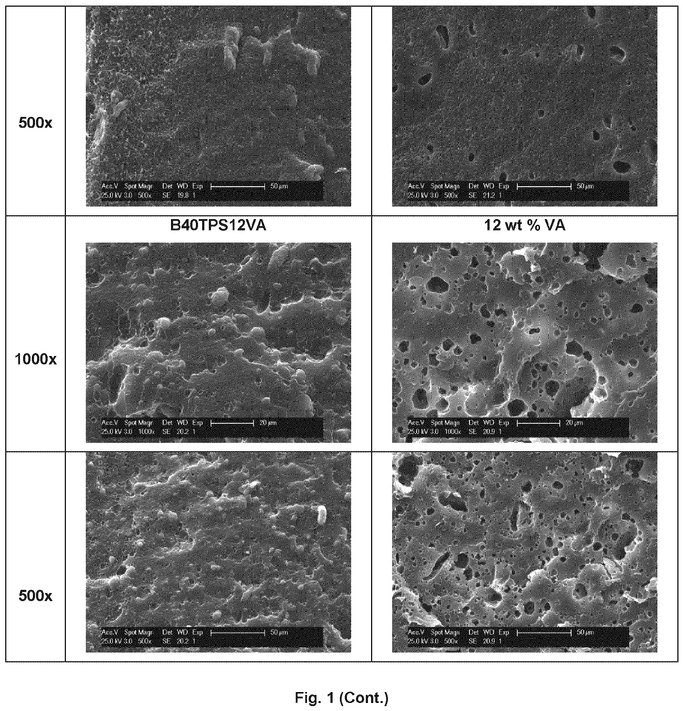

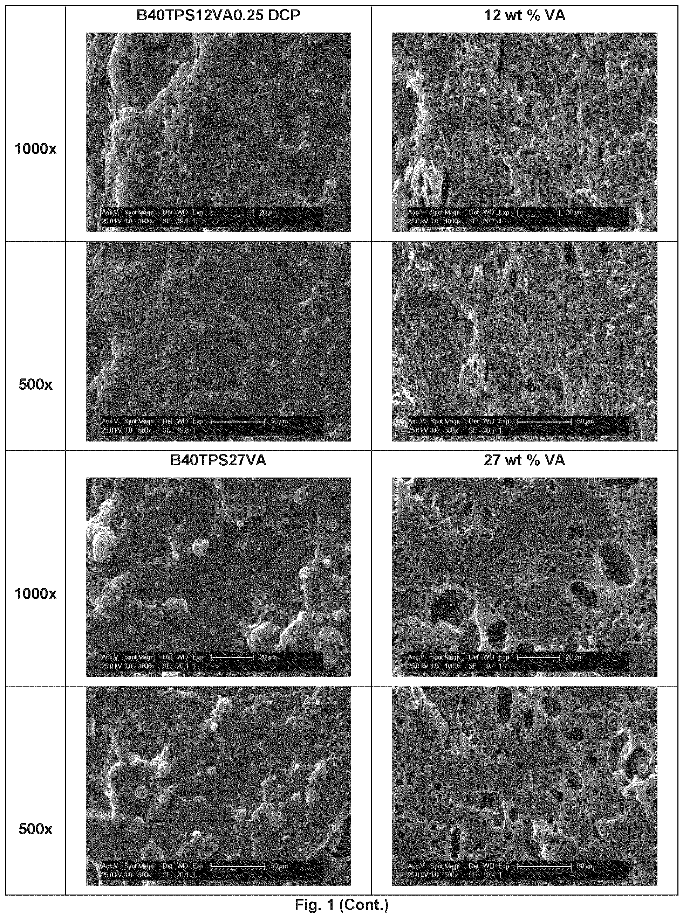

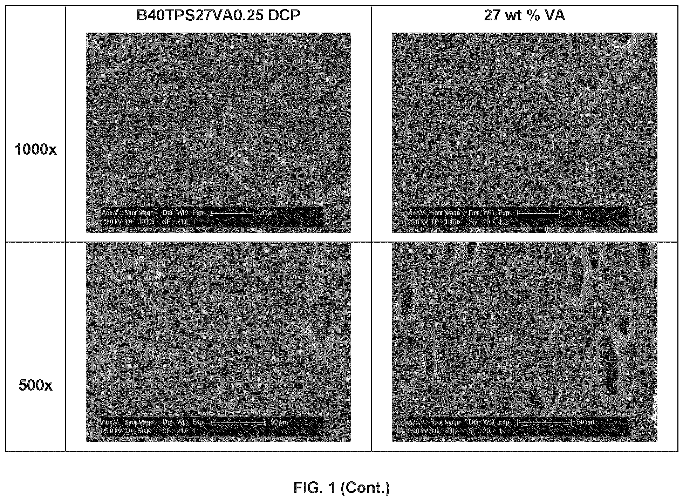

The morphology of the obtained crosslinked and non-crosslinked blends with different VA contents was studied by SEM observation of the cryo-fracture section before and after etching the TPS component. The SEM images for all the samples studied are shown in Fig. 1. EVA/TPS blends were immiscible as expected. TPS is dispersed into the EVA matrix with a non-homogeneous particle size distribution. Moreover, the presence of empty interphase in TPS/EVA blends, due to phase debonding, indicated a poor adhesion between the two different phases. However, in the case of the crosslinked blends, more homogeneous materials were obtained compare to the neat counterparts indicating that DCP is capable to crosslink also the TPS phase in the blend. Comparing the SEM images of the cryo-fracture after etching TPS phase in both non-crosslinked and crosslinked blends, it can be noticed that in the crosslinked blends a better dispersion of TPS phase and a decrease of the TPS particles dimension were observed. Moreover, is possible to observe that increasing the VA content on the EVA in the blends the crosslinking process seems to be more effective especially comparing the blends with EVA12VA and EVA19VA.

| Sample | Gel Content in Xilen (%) | EVA Gel Content in THF (%) |
|---|---|---|
| B40TPS12VA0.25DCP | 69 | 75 |
| B40TPS19VA0.25DCP | 73 | 78 |
| B40TPS27VA0.25DCP | 76 | 84 |
| *the sample are named as BxTPSyVAzDCP where x indicates the amount of TPS in the blend (B), y the amount of VA in the EVA copolymer and z the amount of DCP in the final material. | | |

**Example 2. Preliminary humidity-activated shape memory analysis**

A preliminary humidity-activated shape memory analysis has been performed at 50% of deformation by using an oven for the recovery step.

Whereas, in the EVA-TPS-DCP system, the crosslinked EVA-TPS network was used as fixity domain and the switching domain was the EVA crystal phase, thus the Tm of EVA was used as Ttrans (75 °C). However, depending on the amount of VA in the EVA copolymer, different melting temperature can be used.

This fact indicates that in the EVA-TPS-DCP system, it is possible to obtain the thermally activated shape memory response even if very small deformation has been applied, such as 50%.

For the humidity-activated response, the crosslinked EVA-TPS network was used as fixity domain while the TPS was used as switching domain, thus the Tg of TPS was taken as Ttrans.

The proposed mechanism depends on the plasticized effect of humidity on starchy materials. Indeed, the Tg of the material decreases upon the water content. Moreover, in order to define how many hours are needed to activate both programming and recovery steps in the humidity-mechanical cycles used for the evaluation of the humidity-activated shape memory behaviour, the dependency of moisture loss as well as of the absorption as a function of time were studied.

Therefore, a systematic study on the humidity-activated shape memory response of the EVA-TPS-DCP system has been performed through humidity-mechanical cycles in an Instron machine with a temperature chamber equipped with an ultrasonic humidity generator and the optimized parameters for the humidity-mechanical cycles were:

- Programming: conditioning the sample at room temperature and at humidity saturated atmosphere for 7 hours. Stretching the samples until 80 % of deformation and, after letting the sample during 1 hour at humidity saturated atmosphere, it was dried under constant stress at room temperature for 15 hours.
- Recovery: releasing the stress in dry condition and recover under humidity saturated atmosphere at 37 °C for 7 hours.

Moreover, thermo-mechanical cycles allow accurate simultaneous control of physical parameters such as strain, stress and temperature, during the programming and the recovery, thus we are capable to get a quantitative estimation of the shape memory properties of the materials calculating the strain fixity ratio (Rf) indicating the ability to fix the temporary shape, and the strain recovery ratio (Rr) indicating the ability to recover the original shape.

Both thermally-activated and humidity-activated shape memory response of the three components system, EVA-TPS-DCP, show in both cases very high Rf and Rr, indicating its excellent shape memory properties.

**Example 3. TPS/EVA crosslinked blends**

Briefly, first, the thermo-mechanical destructuration of native starch granules with liquid glycerol and distilled water (in the wt ratio of 100:25:20) was performed in a Brabender® internal kneader (for 3 minutes at 110 °C with a rotor speed of 100 rpm) in order to obtain thermoplastic starch. Once obtained, EVA, TPS and DCP were melt-blended with a twin-screw DSM microcompounder at 100 °C with a screw speed of 80 rpm for 10 minutes. The mixture was compression molded into films of around 0.5 mm thickness and it was subjected to elevated temperatures in order to activate the crosslinking process at 150°C for 20 minutes.

**Example 4. Characterizations**

Dynamic Mechanical Thermal Analysis (DMTA) of the samples was carried out using a DMA Q800 from TA Instrument in film tension mode with an amplitude of 5 $\mu$m, a frequency of 1 Hz, a force track of 125 %, and a heating rate of 2 °C·min$^{-1}$. Samples subjected to DMTA were cut from compression-molded thin films into regular specimens of approximately 20 mm $\times$ 5 mm $\times$ 0.60 mm.

The thermal properties were investigated by Differential Scanning Calorimetry (DSC) analysis. The dynamic DSC measurements were performed in DSC Q200 from TA Instruments, under nitrogen flow. Thermal cycles were composed by the following "heat/cool/heat" procedure: heating at 10 °C min-1 from room temperature to 180 °C, cooling at 10 °C min-1 to -80 °C and heating again at 10 °C min-1 to 180 °C. From second and third scans the glass transition temperatures ($T_g$), the melting temperatures ($T_m$) and the crystallization temperatures ($T_c$) were obtained. The degree of crystallinity ($X_c$) of each sample was calculated according with the equation below:

$$X_c(\%) = \frac{\Delta H_m}{\Delta H_m^{100}} \times 100$$

Where $\Delta H_m^{100}$, is the specific melting enthalpy for a 100 % crystalline PE (293 J/g) as considering that VA comonomer units are not able to participate in the crystalline lattice.

Thermogravimetric analysis (TGA Q500 TA Instruments) was carried out to determine the thermal stability of the samples under nitrogen flow of 60 ml min-1. The samples were heated from room temperature to 600 °C with a heating rate of 10°C min-1.

SEM micrographs of the cryo-fracture surface of the blends and their nanocomposites, before and after etching of TPS phase in dimethyl sulfoxide (DMSO), were obtained by Scanning Electron Microscopy (SEM PHILIPS XL30 with a tungsten filament) in order to study their morphology and the compatibility of the two polymers in the blends and their nanocomposites. The polymer samples were frozen using liquid $N_2$ and then cryo-fractured. All the samples were gold/palladium coated by an automatic sputter coated Polaron SC7640. Furthermore, the compatibility of the blend was investigated also by Confocal Raman spectroscopy using the mapping method. Raman spectra mapping is a method for generating detailed chemical images based on a sample's Raman spectrum and the Raman images were used to visualize the phase separation of the polymer blends and of their nanocomposites. For Raman mapping measurement a Renishaw InVia Reflex Raman Microscope (Wotton-Under-Edge, UK) system was used. An optical microscope is coupled to the system. The laser beam is focused on the sample with an Olympus 0.75 x 50 microscope objective. The spatial resolution was about 1.22 $\mu$m. Calibration was done by referring to the 520 cm-1 line of silicon. The Raman scattering was excited using a diode laser at a wavelength of 785 nm (320 mW power). The collection time for each static spectrum (center 575 cm-1) was one second with one hundred accumulations. The spectrometer grating had 1200 lines mm-1. An automatic motorized translator X-Y stage was used to collect two dimensions images. A total of about 950 spectra were measured for each sample.

The crosslinked specimens were Soxhlet extracted with xylene. The residues were vacuum dried at 60 °C to a constant weight. The gel content G was determined gravimetrically by using the following relation:

$$G\,\% = \frac{weight\ of\ residues\ (g)}{original\ weight\ (g)} \times 100\,\%$$

Mechanical properties were determined using an Instron Universal Testing Machine at a strain rate of 150 mm min-1. Tensile test measurements were performed on 5 dog-bone specimens with a width of 2 mm, thickness of 0.60 mm and leaving an initial length between the clamps of 20 mm. From these experiments were obtained the Young Modulus, as the slope of the curve between 0 % and 2 % of deformation, the elongation at break and the maximum stress reached.

Thermomechanical cycles were performed by DMTA, the samples were heated at 75 °C ($T_s$) for 5 min, and stretched until 50 % by applying a constant deformation stress rate. They were then quenched at 10 °C ($T_{fix}$) under the same stress rate. The temporary shape, as characterized by an elongation of $\varepsilon_m$, was recovered after releasing the stress and the permanent shape, characterized by an elongation of $\varepsilon_p$, was recovered upon heating (2 °C·min-1) to 75 °C ($T_{sw}$). Therefore, with the aim to get a quantitative estimation of the shape memory properties of the material, $R_f$ and $R_r$ have been calculated.

Moisture absorption tested after specimens were dried. The samples were put on the humidity chamber at RH = 97 % and at 37 °C. Weight percentage of specimen was weighted after each 5 min first, and the moisturizing time increased gradually when its absorption speed was slow. Finally, the dependency of moisture absorption on time could be obtained. The same method was used to test the dependency of moisture loss on time but the specimens were previously conditioned at RH = 97 % and then put they were put on a dry chamber (RH = 10 %) at room temperature and at 37 °C until reach the equilibrium.

**Example 5. Humidity-activated shape memory properties**

The samples for the humidity-activated shape memory were cut from compression-molded thin films into rectangular specimens of approximately 20 mm x 4 mm x 0.60 mm and were tested using an Instron Universal Testing Machine with a temperature chamber equipped with an ultrasonic humidity generator and dry air entry. Before starting the test, samples were stored at 25 °C and at RH = 97 % for at least three days. Samples were stretched under humidity saturated atmosphere until 80 % of elongation at 10 mm min$^{-1}$ of speed. Then, the samples were left in tension at control condition, first at room temperature (RT) and at humidity saturated atmosphere for 1 hour, and after at RT drying during 15 hours. Finally, the recovery was triggered by humidity sorption releasing the stress and under humidity saturation at 37 °C. Therefore, with the aim to get a quantitative estimation of the shape memory properties of the material, the strain fixity ratio ($R_f$) and the strain recovery ratio ($R_r$) have been calculated. In particular, $R_r$, the ability to recover the initial shape, was taken as the ratio of the recovered strain to the fixed strain, as given by the following equation:

$$R_r(N) = \frac{\left(\varepsilon_u - \varepsilon_p(N)\right)}{\varepsilon_u - \varepsilon_p(N-1)} \times 100\ \%$$

$R_f$, the ability to fix the temporary shape, is the amplitude ratio of the fixed strain to the total strain, as presented by the equation 3:

$$R_f(N) = \frac{\varepsilon_u(N)}{\varepsilon_m} \times 100\ \%$$

where, $\varepsilon_m$ is the deformed strain, $\varepsilon_u$ the fixed strain, $\varepsilon_p$ the recovered strain and N is the number of cycles.

**Example 6. Thermal properties**

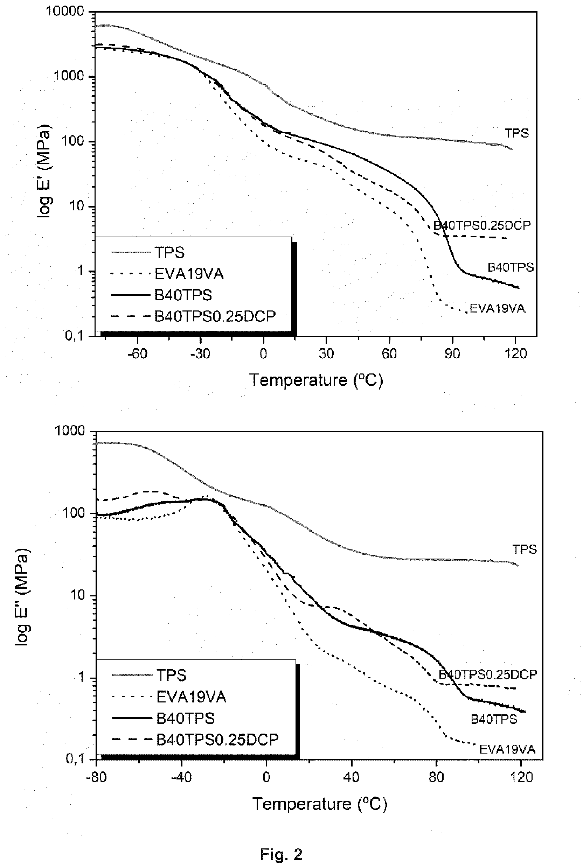

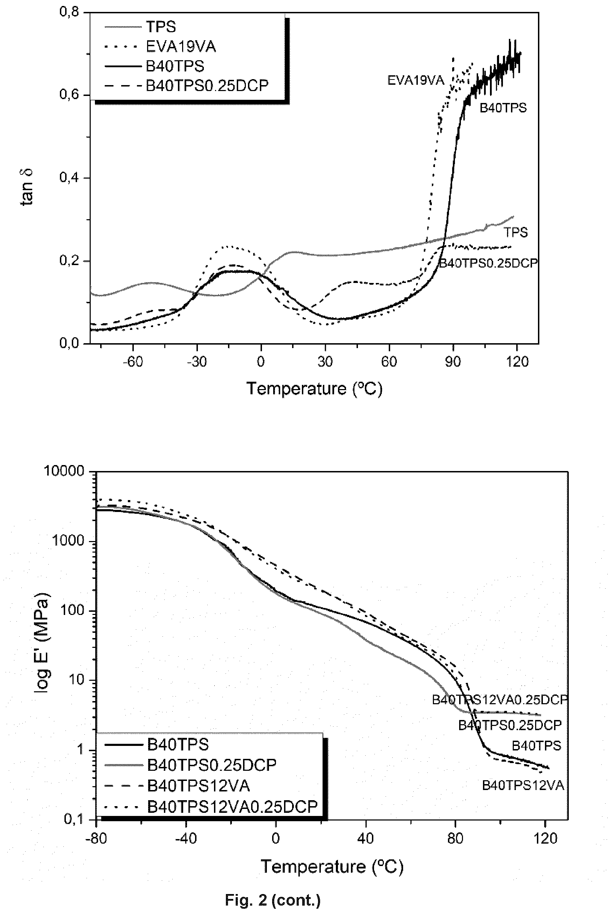

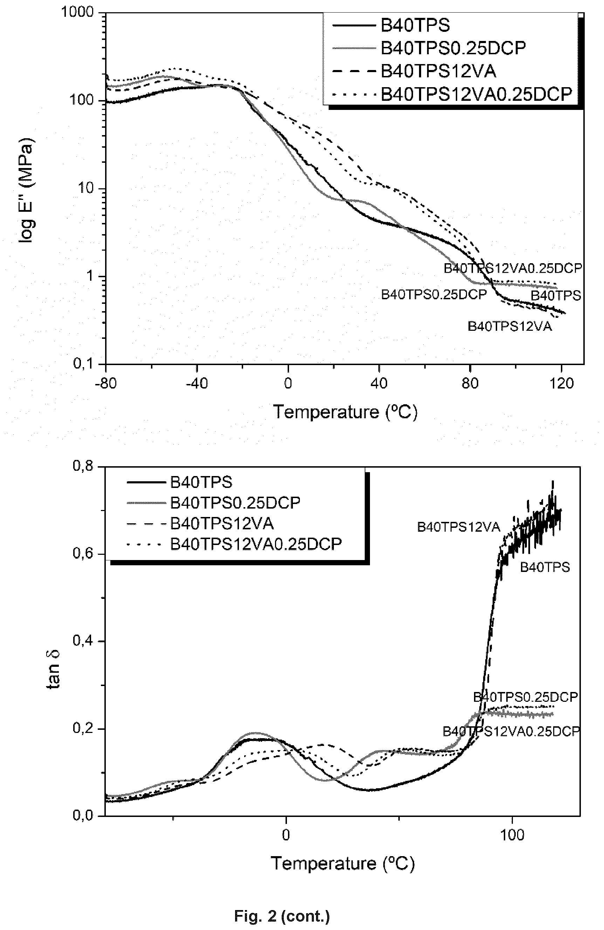

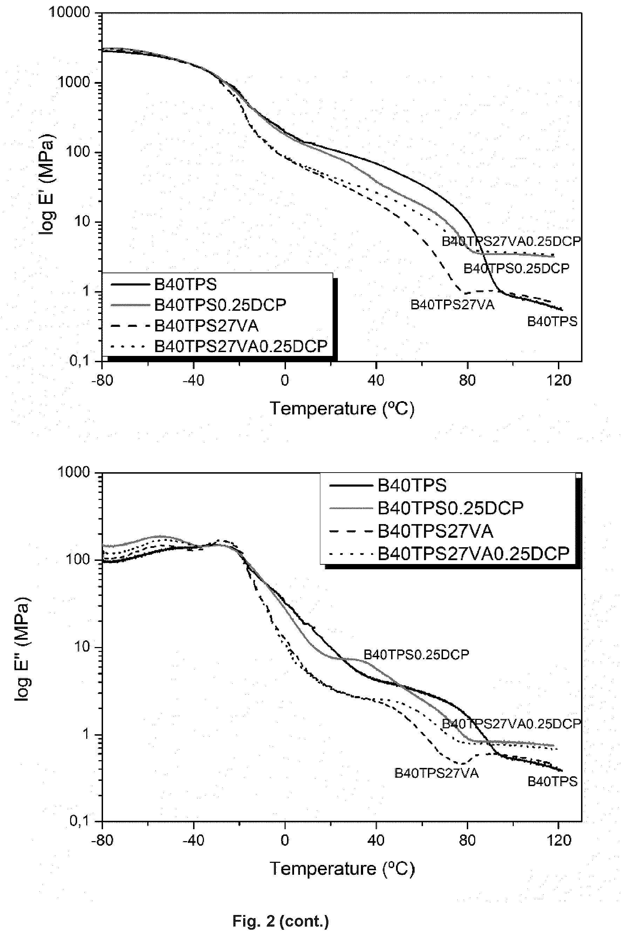

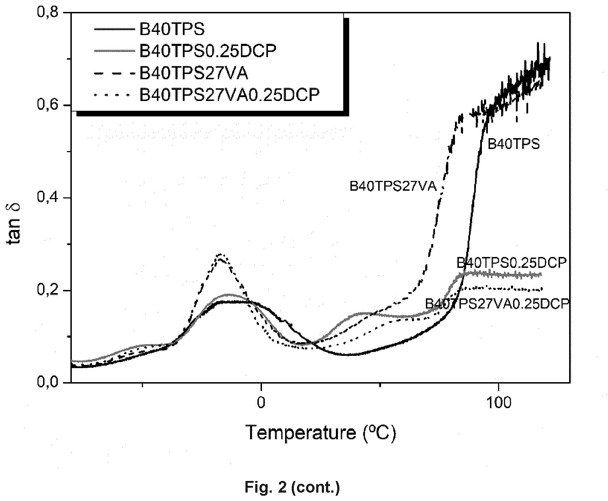

In order to study the main thermo-mechanical relaxation of our systems, DMTA analysis was performed. The evolution of the storage modulus (E'), loss modulus (E") and damping factor (tan δ) as a function of temperature, measured over the temperature range -80°C to 120 °C, for the non-crosslinked and crosslinked blends are presented in the Figure 2.
The storage modulus drop associated with the glass transition (β'-relaxation) of EVA is about two orders of magnitude for all the samples. This is notably different for many other semi-crystalline polymers, such as polyethylene, for which the glass transition also occurs below room temperature but the associated modulus drop is rather minimal due to the predominance of the crystalline phase. As a result, the samples containing EVA are soft at room temperature despite their semicrystalline character and they have low modulus values, according to the tensile results. Indeed, the room temperature moduli obtained from the stress-strain curves were within the range of 32 ± 2 MPa (for neat EVA), confirming the softness of all the samples. EVA modulus shows a strong dependency on the temperature. This change is accompanied by a peak in loss modulus curve at -28°C, confirming the value obtained by DSC analyses (-26 °C). Regarding the tan δ evolution, EVA has a broad $T_g$, between -30 and 10 °C due to the glass transition and the PE crystals relaxation overlapping as reported in literature. Another small peak appears in the tan δ curve at 42 °C due to the crystal melting of smallest crystals as previously demonstrated.
In the case of neat TPS the storage modulus falls in two steps, the first between -80 and -30 °C and the second one between -30 and 20 °C with the respective peaks in tan δ at -52 °C and 15 °C. At temperature of -70 °C, the TPS exhibits a high storage modulus values around 6000 MPa, confirming the rigidity of the frozen structure below $T_g$. It was previously reported in the literature that for starchy materials constituted by the three-constituent system as water-glycerol-starch, the roles of both competing plasticizer (glycerol and water) are dependent on their respective concentration. The results observed in the Figures above show that using 25 wt % of glycerol leads to two relaxations of a phase-separate system on neat TPS curve. The first peak in the tan δ curve, termed β-relaxation, is due to a starch-poor phase rich in glycerol-water content. The glass transition of this phase decreases with increasing water content but is largely independent of glycerol content. The upper peak in the tan δ curve of neat TPS, termed α-relaxation, is due to a starch-rich phase.
B40TPS blend showed the typical relaxations belonging to neat EVA and neat TPS without any shift, although the β-relaxation of TPS is shifted at higher temperatures. Indeed, there was an overlapping of the EVA β'-relaxation and the TPS β-relaxation while the TPS α-relaxation almost disappeared. This behavior is likely due to the possible presence of a certain degree of miscibility between both polymers at this blend composition. It was previously reported for EVA/TPS blends that despite the fact that the system is immiscible, a certain degree of miscibility could exist and the cohesive energy of the blend can be higher than that of the separated components. Moreover, highly polar polymer mixtures able to form hydrogen bonds show very complex behavior.

In the case of B40TPS0.25DCP, the tan δ curve showed all the characteristic thermal relaxations belonging to neat EVA and TPS. Indeed, it is possible to observe both α- and β-relaxation of TPS at -50 and 43 °C as well as the EVA β'-relaxation at -13 °C. It is easy to notice that the TPS β-relaxation was shifted at higher temperature. Moreover, the presence of the crosslinked structure lead to a plateau in the tan δ curve, comparing the non-crosslinked and crosslinked blends, leading to a stable structure at temperatures higher than the $T_m$ of EVA19VA (Fig. 2).

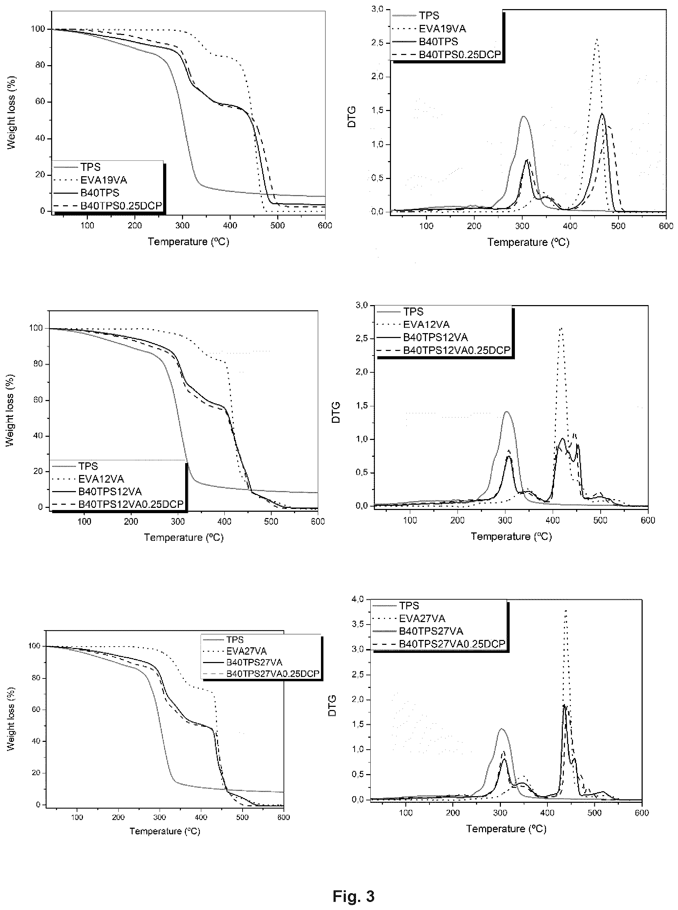

The thermograms of the neat materials (TPS and EVA) compared to the respective crosslinked and non-crosslinked blends are showed in the Fig. 3.

In the thermogram relative to the blend containing EVA19VA, it is possible to observe the two steps degradation mechanism of EVA. The first pick at 340 °C in the DTG curve belong to the vinyl acetate degradation (15 wt %) and at 455°C the pick related with the degradation of the ethylene (85 wt %) was observed. Whereas in the DTG curve of TPS is possible to note a first wide pick (13 wt %), from 50 and 230 °C due to the overlapping of the evaporation of the absorbed water into the TPS matrix and the glycerol free degradation (the maximum degradation temperature of glycerol is 230 °C and the initial degradation temperature is 108 °C). The second and major pick at 303 °C belong to the TPS degradation (79 wt %). This last pick presented a small shoulder at lower temperatures, indicating the possible separation of the amylopectin and amylose degradations. It is worth to notice that after 600 °C, 8 wt % of chart is still present (Fig. 3).

The B40TPS blend DTG curve is a combination of the two polymers, it means that EVA and TPS are not miscible but a slight shift at higher temperature of the maximum degradation temperatures was observed. In the following table the maximum degradation temperatures ($T_{max}$) are reported.

| Sample | $T_{max}$ (°C) TPS | $T_{max}$ (°C) EVA19VA |
|---|---|---|
| TPS | 303 | - |
| EVA19VA | - | 340/455 |
| B40TPS19VA | 309 | 354/467 |
| B40TPS19VA0.25DCP | 308 | 350/437/504 |
| * wherein the sample TPS corresponds to a material 100% TPS; EVA19VA corresponds to an EVA with a percentage in VA of 19%; the sample B40TPS corresponds to a blend (B) of 40% TPS and 60% EVA (EVA19VA); and the sample B40TPS0.25DCP correspond to a blend (B) of 40% TPS, 59.75% EVA (EVA19VA) and 0.25% DCP. | | |

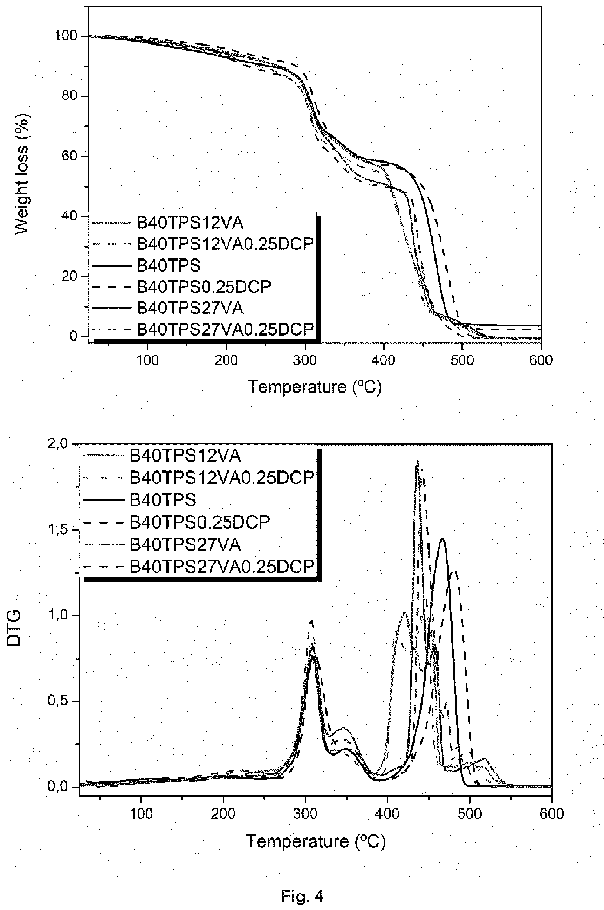

As it is shown in the above table, for the non-crosslinked blend all the $T_{max}$ were shifted at higher temperatures mostly for the picks corresponding with EVA degradation while for the crosslinked blend, the pick corresponding with ethylene degradation was shifted at lower temperatures compare to the EVA19VA curve. Moreover, a new pick appears in the DTG curve at 504 °C (Fig. 3,4).

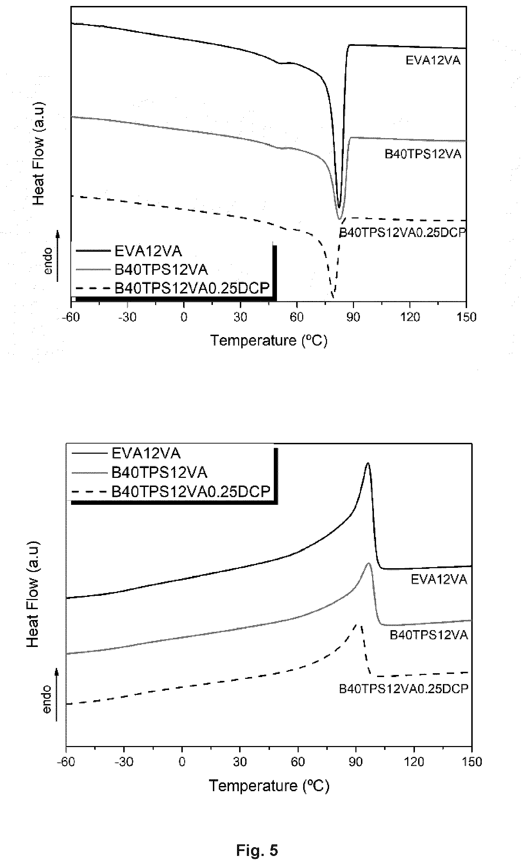

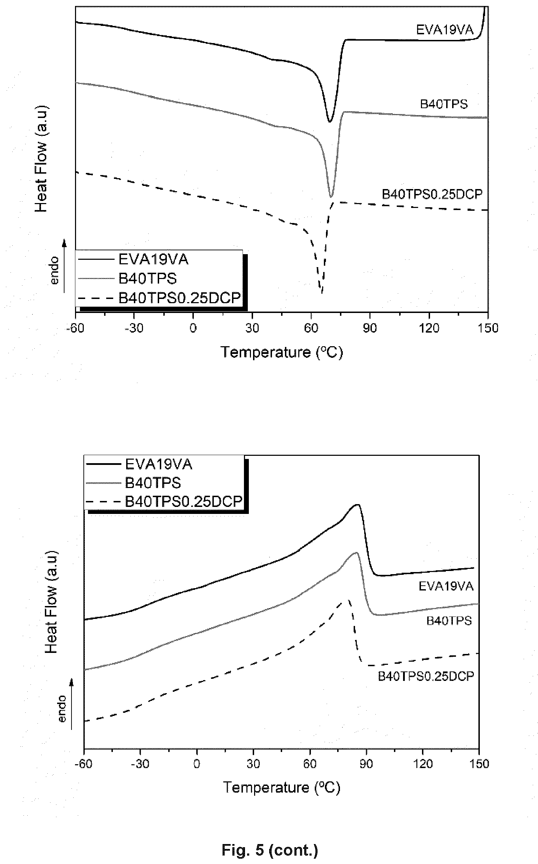

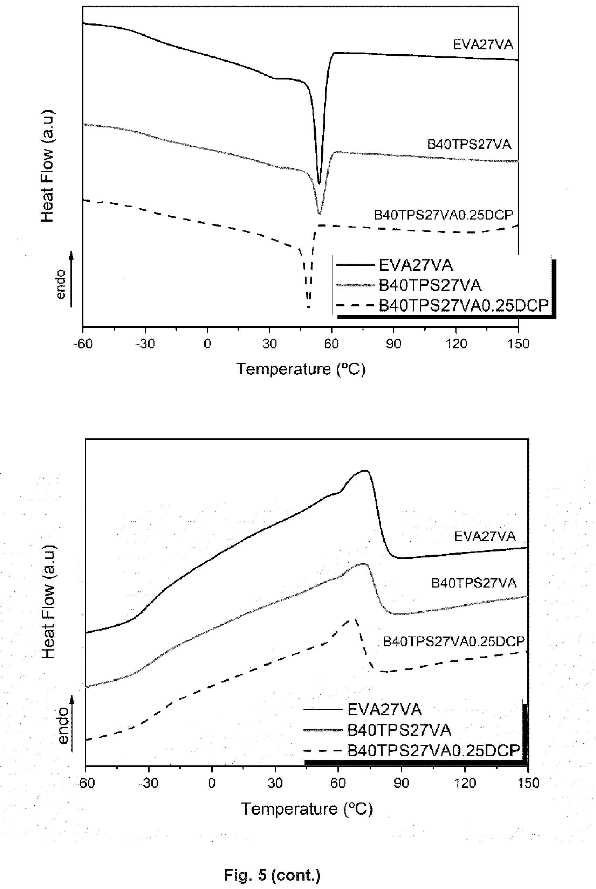

DSC Analysis was performed in order to study the influence of crosslinking on thermal properties of the different blends. A slightly shift of the melting and crystallization temperatures at lower temperature was observed for all the samples crosslinked probably due to the lower chain mobility and the relative formation of smaller crystals of ethylene when the blends present the crosslinked structure (Fig. 5).

No changes in term of degree of crystallinity were observed. Increasing the VA content of EVA the melting and crystallization temperatures decreased while the degree of crystallinity decreased comparing the EVA12VA and EVA19VA but between EVA19VA and EVA27VA there were not differences.

| Samples | $T_c$ (°C) | $\Delta H_c$ (J/g) | $T_m$ (°C) | $\Delta H_m$ (J/g) | $X_c$ (%) | $T_g$ (°C) |
|---|---|---|---|---|---|---|
| EVA12VA* | 83 | 96 | 96 | 91 | 31 | -23 |
| B40TPS12VA** | 83 | 58 | 97 | 49 | 28 | -26 |
| B40TPS12VA0.25DCP** | 79 | 54 | 92 | 53 | 30 | -23 |
| EVA19VA* | 70 | 68 | 86 | 53 | 18 | -26 |
| B40TPS19VA** | 70 | 40 | 85 | 33 | 19 | -26 |
| B40TPS19VA0.25DCP** | 65 | 37 | 80 | 32 | 18 | -26 |
| EVA27VA* | 54 | 56 | 73 | 54 | 18 | -31 |
| B40TPS27VA** | 54 | 33 | 71 | 38 | 22 | -27 |

(continued)

| Samples | $T_c$ (°C) | $\Delta H_c$ (J/g) | $T_m$ (°C) | $\Delta H_m$ (J/g) | $X_c$ (%) | $T_g$ (°C) |
|---|---|---|---|---|---|---|
| B40TPS27VA0.25DCP** | 49 | 31 | 67 | 31 | 18 | -30 |

* the samples are named as EVAyVA where y indicates the amount of VA;
** the samples are named as BxTPSyVAzDCP, where x indicates the amount of TPS in the blend (B), y the amount of VA in the EVA copolymer and z the amount of DCP in the final material.

Mechanical properties were tested and the results in term of elastic modulus, tensile strength and elongation at break are reported in the following table. Comparing the three EVAs, it is worth to notice that increasing the VA content, the elastic modulus decreased leading to a rubber-like polymer. As we expect, the mechanical behavior of the blends is quite different than the mechanical behavior of neat EVA. In fact, the non-crosslinked blends had higher elastic modulus and lower tensile strength and elongation at break compare to the neat EVAs, so-designing more brittle materials. Interfacial adhesion between blend components is an important factor in determining the properties of the blend. Incompatibility between the blend components leads to poor interfacial adhesion, resulting in grossly phase separated morphologies with poor properties. As it was previously showed on the SEM results, EVA/TPS blends are incompatible blends. Therefore, due to the phase separated morphology, EVA/TPS blends showed poor mechanical properties. With the aim to improve the properties of the EVA/TPS blends, crosslinking was performed. For all the crosslinked blends, the elastic modulus and the tensile strength increase while the elongation at break is almost the same, probably due to the enhanced interfacial adhesion and the crosslinked network in the blends.

| Sample | Elastic Modulus (MPa) | Tensile Strength (MPa) | Elongation at break (%) |
|---|---|---|---|
| EVA12VA* | 97±4 | 26±2 | 745±42 |
| B40TPS12VA** | 153±6 | 7±1 | 260±70 |
| B40TPS12VA0.25DCP** | 166±4 | 12±2 | 310±73 |
| EVA19VA* | 32 ± 2 | 29 ± 5 | 1080 ± 53 |
| B40TPS19VA** | 36 ± 1 | 8.7 ± 0.5 | 499 ± 22 |
| B40TPS19VA0.25DCP** | 89±1 | 17±1 | 465±23 |
| EVA27VA* | 25±1 | 29±3 | 944±46 |
| B40TPS27VA** | 59±3 | 11±1 | 576±54 |
| B40TPS27VA0.25DCP** | 67±1 | 20±1 | 509±8 |

* the samples are named as EVAyVA where y indicates the amount of VA
** the samples are named as BxTPSyVAzDCP, where x indicates the amount of TPS in the blend (B), y the amount of VA in the EVA copolymer and z the amount of DCP in the final material.

**Example 7. Thermally-activated shape memory properties**

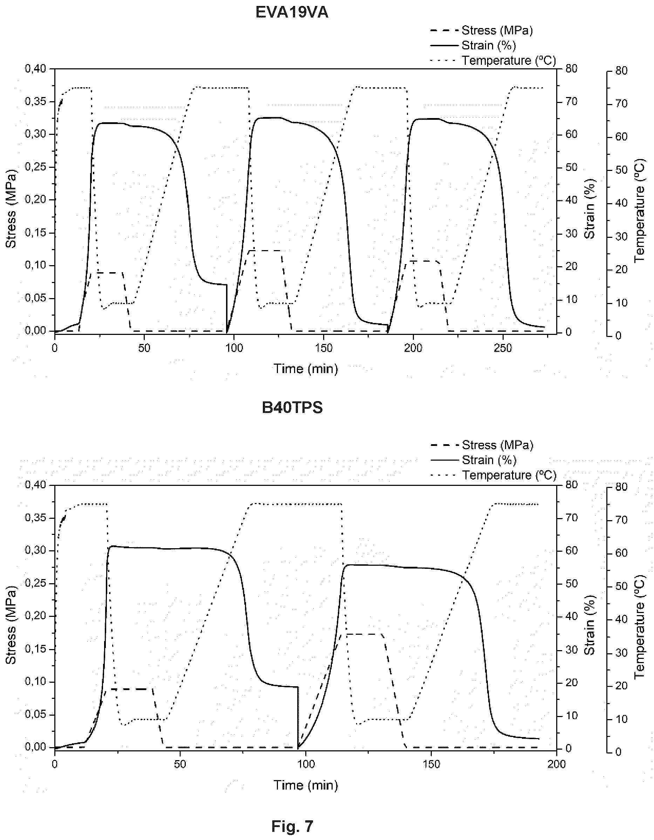

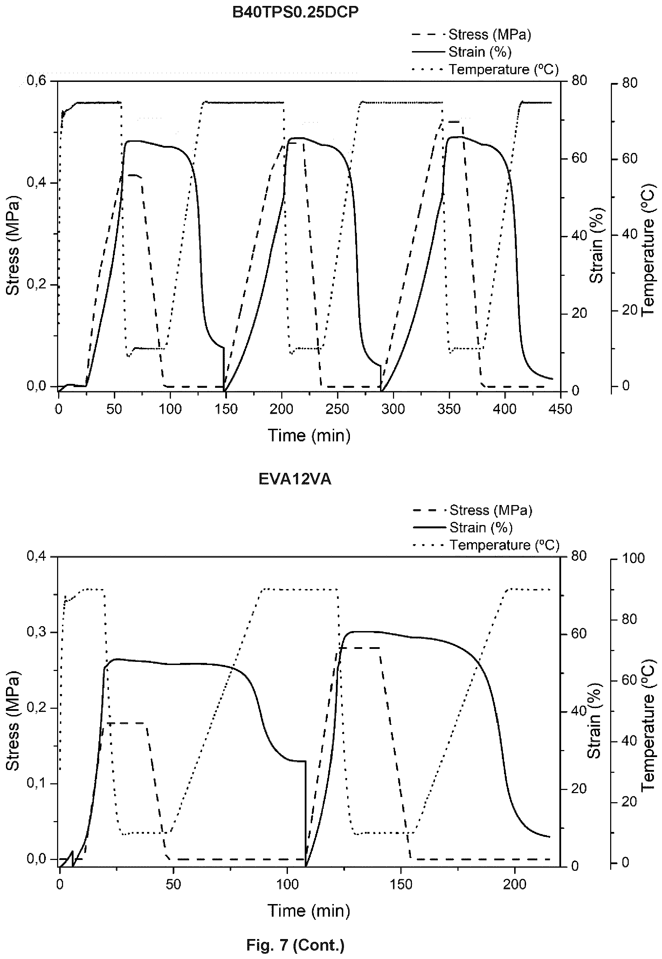

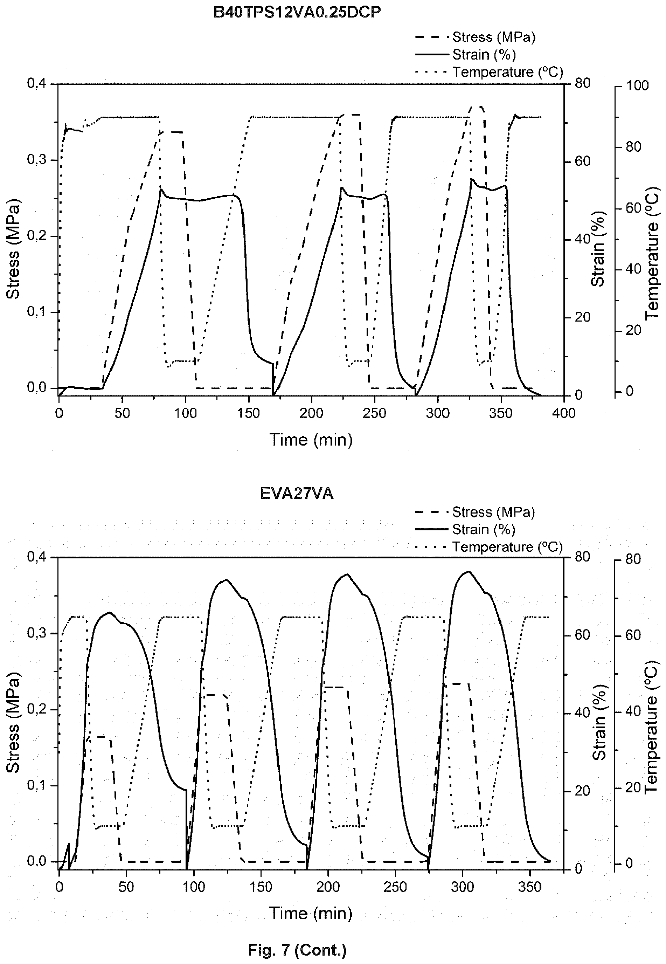

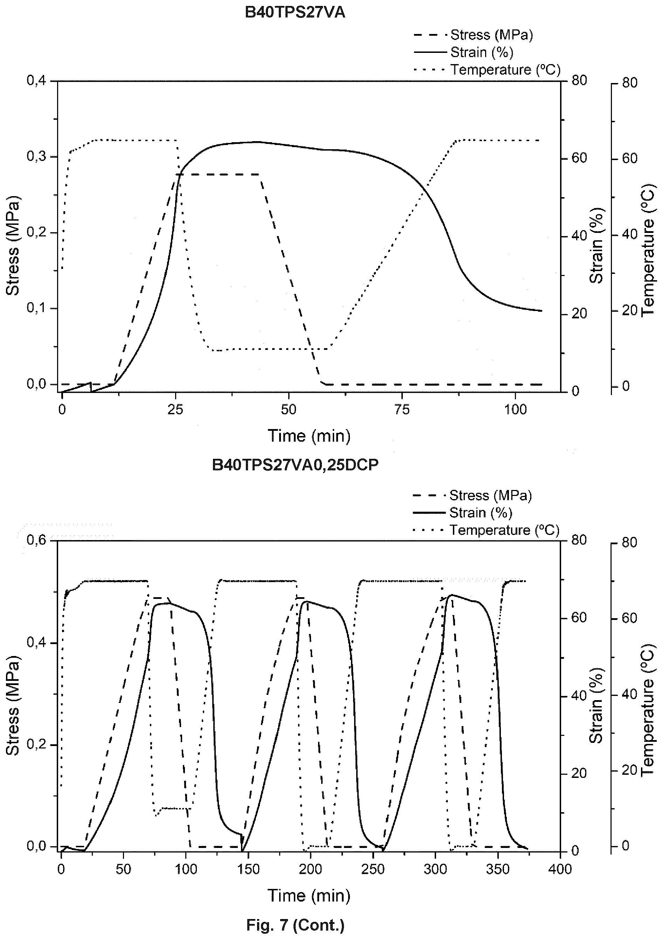

The thermal shape memory effect was characterized using a four-step program. As it was shown in the DSC results, increasing the VA content the $T_m$ of neat EVAs and their non-crosslinked and crosslinked blends decreased. Thus, depending on the type of EVA used in each blend a different $T_{trans}$ was applied. Indeed, the applied $T_{trans}$ were 85 °C, 75 °C and 65 °C, for EVA12VA, EVA19VA and EVA27VA respectively. In the 1st step, the samples were kept isothermally at the $T_{trans}$ for 5 minutes, after which the nominal stress was increased with a stress ramp of 0.05 MPa min$^{-1}$, until rich 50 % of strain. In the 2nd step, samples were quenched at 10 °C ($T_{fix}$) for 10 min. In the 3rd step, the stress was completely unloaded and in the 4th step, the samples were heated to the $T_{trans}$ at 2 °C min$^{-1}$ with no applied stress in order to recover their permanent shape. The values of applied stress, strain and recovery ratio are reported in following table (Fig. 7).

| Sample | $R_r$ (%) | | | $R_f$ (%) | | |
|---|---|---|---|---|---|---|
| | 1 | 2 | 3 | 1 | 2 | 3 |
| EVA19VA* | 77 | 96 | 97 | 99 | 98 | 98 |

(continued)

| Sample | $R_r$ (%) | | | $R_f$ (%) | | |
|---|---|---|---|---|---|---|
| | 1 | 2 | 3 | 1 | 2 | 3 |
| B40TPS19VA** | 69 | 94 | - | 99 | 98 | - |
| B40TPS19VA0.25DCP** | 83 | 90 | 95 | 98 | 97 | 97 |
| EVA12VA* | 49 | 87 | - | 98 | 98 | - |
| B40TPS12VA0.25DCP** | 84 | 96 | 99 | 99 | 99 | 99 |
| EVA27VA* | 69 | 92 | 96 | 96 | 94 | 93 |
| B40TPS27VA** | 67 | - | - | 97 | - | - |
| B40TPS27VA0.25DCP** | 93 | 98 | 99 | 97 | 98 | 98 |

\* the samples are named as EVAyVA where y indicates the amount of VA

\*\* the samples are named as BxTPSyVAzDCP, where x indicates the amount of TPS in the blend (B), y the amount of VA in the EVA copolymer and z the amount of DCP in the final material.

**Example 8. Moisture loss and absorption**

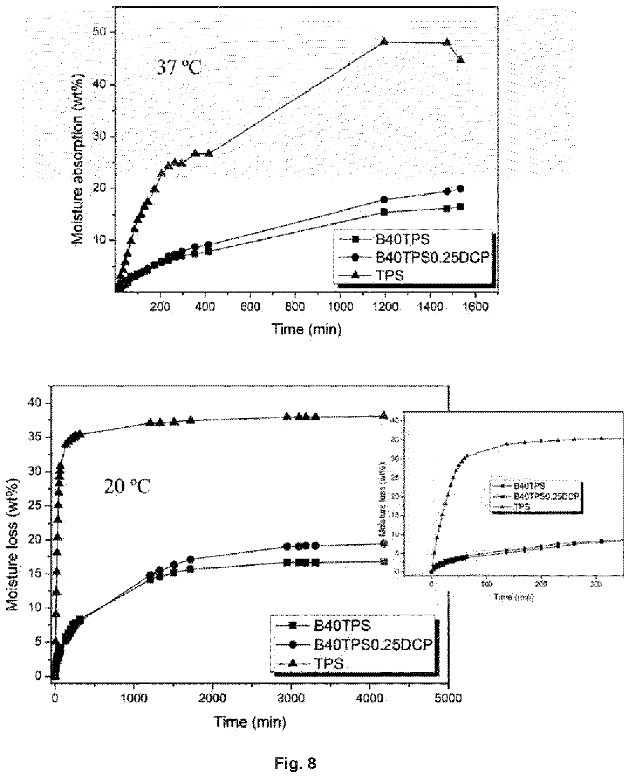

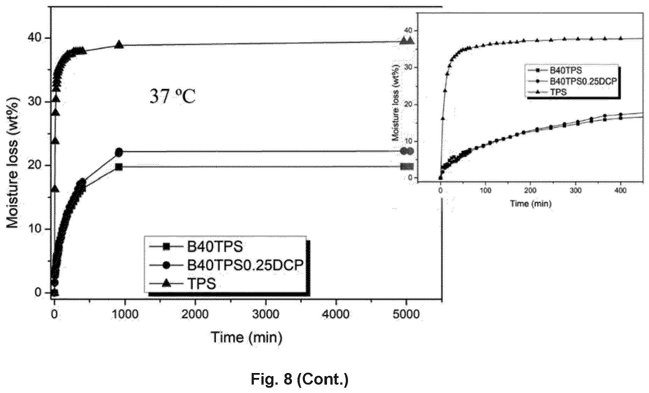

Moisture absorption tests were performed after specimens were dried in a desiccator (RH = 10 %) for 1 week. The samples were then put on the humidity chamber at RH = 97 % and at 37 °C until reaching the equilibrium. The specimens were weighted every 5 min first, and the moisturizing time was increased gradually when their absorption speed was slower. Finally, the dependency of moisture absorption on time could be obtained (Figure 8). The same method was used to test the dependency of moisture loss on time, but the specimens were previously conditioned at RH = 97 % for 1 week, and then they were put on a dry chamber (RH = 10 %) at room temperature or at 37 °C until reach the equilibrium.

**Example 9. Humidity-activated shape memory properties**

The water-activated shape memory test for the crosslinked blend B40TPS0.25DCP was performed.
The cycle applied is composed by different steps:

1. Condition the sample in the humidity chamber at 97% RH for at last 3 days at RT;
2. Deform the sample until 80% of elongation at RT in the Instron machine with the temperature chamber;
3. Left the sample stretched at 97 % RH and RT for 1 hour;
4. Dry the sample (10 % RH) at RT for 15 hours;
5. Release the stress and wet the sample at 97% RH for 7 hours in order to measure the recovery of the initial shape;

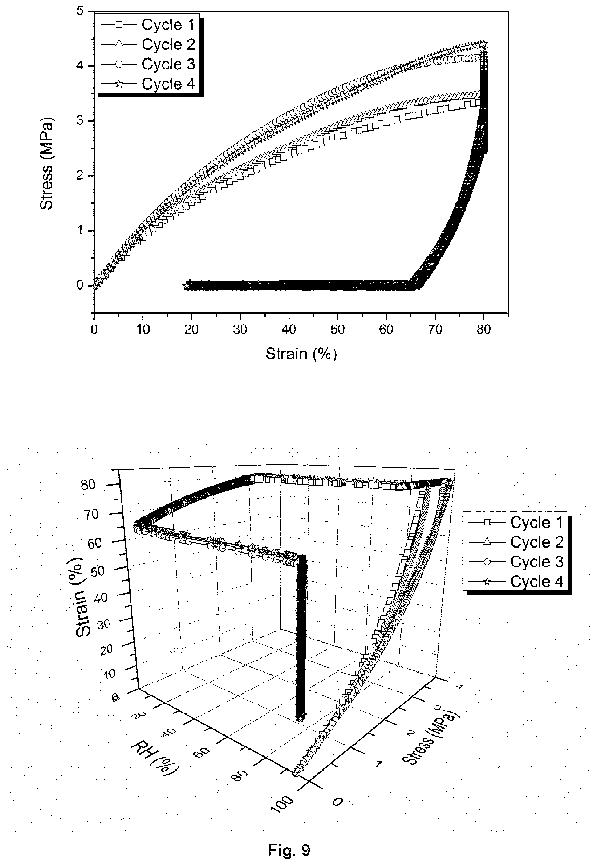

The 2D and 3D graphs for the A63e sample are reported in Fig. 9 (the Cycle 0 is not reported).
In the following table the recovery ratio and fixity ratio values for the sample B40TPS0.25DCP are reported.

| Cycle | $R_f$ (%) | $R_r$ (%) |
|---|---|---|
| 1 | 83 | 80 |
| 2 | 83 | 79 |
| 3 | 81 | 81 |
| 4 | 82 | 85 |

**Claims**

1. A crosslinked three-component system **characterized in that** it comprises a blend of:

• a first polymer consisting of ethylene-co-vinyl acetate with a proportion of vinyl acetate that ranges between 10% and 50% by weight of the total weight;
• a second polymer consisting of a thermoplastic starch; and
• a crosslinking agent consisting in an organic peroxide compound;

and wherein the proportion of ethylene-co-vinyl acetate ranges between 90% and 10%, the proportion of thermoplastic starch ranges between 10% and 90% and the proportion of the crosslinking agent ranges between 0.05% and 3%, with a total sum of 100%.

2.  A crosslinked three-component system according to claim 1 wherein the proportion of ethylene-*co*-vinyl acetate is 60% w/w.

3.  A crosslinked three-component system according to any of the preceding claim wherein the proportion of vinyl acetate in the ethylene-*co*-vinyl acetate is in a proportion by weight of the total weight between 12% and 27%.

4.  A crosslinked three-component system according to any of the preceding claim wherein the proportion of vinyl acetate in the ethylene-*co*-vinyl acetate is 19% w/w.

5.  A crosslinked three-component system according to any of the preceding claim wherein the proportion of thermoplastic starch is 40% w/w.

6.  A crosslinked three-component system according to any preceding claim wherein the thermoplastic starch is selected from starch with a botanical origin selected from wheat, rice, cassava, tapioca, bean, rye, oat, sorghum, sweet potato, arrowroot, sago, plantain, banana, pea, potato, corn, and barley.

7.  A crosslinked three-component system according to any of the preceding claim wherein the proportion of the crosslinking agent is 0.25% w/w.

8.  A crosslinked three-component system according to any preceding claim wherein the crosslinking agent is selected from dicumyl peroxide, dibenzyl peroxide, *tert*-butylperoxy 2-ethylhexyl carbonate, 2,5-dimethyl-2,5-di(*tert*-butylperoxy)hexane, *tert*-butyl peroxybenzoate, *tert*-butyl peroxy-3,5,5-trimethylhexanoate and dibutyltin oxide, tetrapropyl orthosilicate.

9.  A crosslinked three-component system according to claim 8 wherein the crosslinking agent is dicumyl peroxide.

10. A method for obtaining a crosslinked three-component system according to any of claims 1 to 9, **characterized in that** it comprises the following stages:

    (a) thermo-mechanical destructuration of native starch granules with liquid glycerol and distilled water;
    (b) melt-blendeding of the three components, EVA, TPS and DCP with a twin-screw DSM microcompounder at a temperature that ranges between 50 and 100 °C with a screw speed that ranges between 50 and 100 rpm for 5 to 15 minutes;
    (c) compression moulding into films at a temperature that ranges between 140 and 160°C for 15 to 25 minutes in order to activate the crosslinking process.

11. Use a crosslinked three-component system according to any of claims 1 to 9 for applications in biomedical fields.

12. Use a crosslinked three-component system according to any of claims 1 to 9 for applications in packaging fields.

| | B40TPS | 19 wt % VA |
|---|---|---|
| 1000x | | |
| 500x | | |
| | B40TPS0.25 DCP | 19 wt % VA |
| 1000x | | |

Fig. 1

Fig. 1 (Cont.)

Fig. 1 (Cont.)

FIG. 1 (Cont.)

Fig. 2

Fig. 2 (cont.)

**Fig. 2 (cont.)**

Fig. 2 (cont.)

Fig. 2 (cont.)

Fig. 3

Fig. 4

Fig. 5

Fig. 5 (cont.)

Fig. 5 (cont.)

Fig. 6

**Fig. 7**

B40TPS0.25DCP

EVA12VA

Fig. 7 (Cont.)

## B40TPS12VA0.25DCP

## EVA27VA

Fig. 7 (Cont.)

B40TPS27VA

B40TPS27VA0,25DCP

Fig. 7 (Cont.)

Fig. 8

Fig. 8 (Cont.)

Fig. 9

Europäisches
Patentamt

European
Patent Office

Office européen
des brevets

## EUROPEAN SEARCH REPORT

**Application Number**

EP 20 38 2226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 942 949 A (CHENGDU NEW KELI CHEMICAL TECH CO LTD) 28 June 2019 (2019-06-28) | 1-10 | INV. C08L3/02 C08L23/04 |
| A | * examples 1-4 * | 11,12 | |

TECHNICAL FIELDS
SEARCHED      (IPC)

C08L

The present search report has been drawn up for all claims

| Place of search | Date of completion of the search | Examiner |
|---|---|---|
| Munich | 13 August 2020 | Friedrich, Christof |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

.......................................................................................
& : member of the same patent family, corresponding
  document

EPO FORM 1503 03.82 (P04C01)

**ANNEX TO THE EUROPEAN SEARCH REPORT
ON EUROPEAN PATENT APPLICATION NO.**

EP 20 38 2226

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2020

| Patent document cited in search report | Publication date | Patent family member(s) | Publication date |
|---|---|---|---|
| CN 109942949 A | 28-06-2019 | NONE | |